# EUROPEAN PATENT APPLICATION

(11) **EP 4 400 902 A1**
(43) Date of publication of application: **17.07.2024**
(21) Application number: 22866084.1
(22) Date of filing: 07.04.2022
(51) Int. Cl.: G02F 1/065, G02F 1/061

(54) **ELECTRO-OPTIC MODULATOR**

(30) Priority: 10.09.2021 CN 202122193530 U
(71) Applicant: Picmore Technology (Suzhou) Ltd., Suzhou, Jiangsu 215000 (CN)
(72) Inventor: JI, Mengxi, Suzhou, Jiangsu 215000 (CN); LI, Xianyao, Suzhou, Jiangsu 215000 (CN); SUN, Yuzhou, Suzhou, Jiangsu 215000 (CN)
(74) Representative: Kurig, Thomas
(86) International application number: PCT/CN2022/085508
(87) International publication number: WO 2023/035606

(57) **Abstract**

The present application specifically relates to an electro-optic modulator, comprising: a substrate; a first dielectric layer, located on the substrate; an opening being formed in the first dielectric layer, and the opening exposing a portion of the substrate; a waveguide, located on the substrate and located at the bottom of the opening or below the opening; a first electrode, located in the first dielectric layer, located on one side of the waveguide, and spaced apart from the waveguide; a second electrode, located in the first dielectric layer, located on the side of the waveguide distant from the first electrode, and spaced apart from the waveguide; and an organic electro-optic material layer, at least located in the opening and at least covering the waveguide. In the electro-optic modulator of the embodiments, a common waveguide different from a slit waveguide is used, and the manufacturing process requirements are low; the organic electro-optic material layer is covered on the waveguide, so that a light field can be leaked into the organic electro-optic material to the maximum extent, thereby effectively reducing optical loss and having high electro-optic modulation efficiency.

## Description

### CROSS-REFERENCE TO RELATED APPLICATION

This application is a continuation of international PCT application serial no. PCT/CN2022/085508, filed on April 07, 2022, which claims a priority and benefit of China application no. 202122193530.0, filed on September 10, 2021. The entirety of each of the above-mentioned patent applications is hereby incorporated by reference and made a part of this specification.

### BACKGROUND

### Technical Field

The present application belongs to the field of optoelectronic technology, and specifically, relates to an electro-optic modulator.

### Description of Related Art

The electro-optic modulation coefficient of organic electro-optic materials (e.g., SEO 100) is several times or even dozens of times higher than that of lithium niobate materials. Combining this type of organic electro-optic materials having large electro-optic modulation coefficients with the large-scale integration advantages of silicon optical platforms, the bandwidth bottleneck of conventional silicon-based electro-optic modulators can be broken through.

A common method is to fill silicon slot waveguides with organic electro-optic materials to implement high-rate electro-optic modulators. This type of electro-optic modulators has the advantages of highly concentrated electric field and excessively high electro-optic modulation efficiency. However, following problems can still be found: 1. The manufacturing of slot waveguides requires high process requirements. 2. The optical loss is high.

### SUMMARY

### Technical Problems

Based on the above, it is necessary to provide an electro-optic modulator capable of solving the abovementioned problems in view of the problems of high process requirements and high optical loss due to the use of slot waveguides in the electro-optic modulators in the background art.

### Solutions to Problems

### Technical Solutions

In one aspect, the present application provides an electro-optic modulator, including:
a substrate;
a first dielectric layer located on the substrate, an opening being formed in the first dielectric layer, and the opening exposing a portion of the substrate;
a waveguide located on the substrate and located at the bottom of the opening or below the opening;
a first electrode located in the first dielectric layer, located on one side of the waveguide, and spaced apart from the waveguide;
a second electrode located in the first dielectric layer, located on one side of the waveguide distant from the first electrode, and spaced apart from the waveguide; and
an organic electro-optic material layer at least located in the opening and at least covering the waveguide.

In the electro-optic modulator of the embodiment, a common waveguide different from a slot waveguide is used, and the manufacturing process requirements are low; the organic electro-optic material layer is covered on the waveguide, so that a light field can be leaked into the organic electro-optic material to the maximum extent, thereby effectively reducing optical loss and having high electro-optic modulation efficiency.

In one of the embodiments, each of the first electrode and the second electrode includes:
a bottom electrode extending from the first dielectric layer to the bottom of the opening, where a gap is provided between the bottom electrode and the waveguide;
a metal stack structure located in the first dielectric layer and located on the bottom electrode, where the metal stack structure includes a plurality of metal layers arranged at intervals and a plurality of interconnecting plugs, and the connection between the metal layer located on a bottom layer and the bottom electrode and the connection between adj acent metal layers are made through the interconnecting plugs.

In one of the embodiments, the bottom electrode is a doped silicon electrode.

In one of the embodiments, the gap between the bottom electrode and the waveguide is 500nm to 5000nm.

By using a doped silicon electrode as the bottom electrode in the present application, the electric field generated by the doped silicon electrode can achieve electro-optic modulation. However, the gap between the bottom electrode and the waveguide cannot be excessively far or excessively close. If the gap between the bottom electrode and the waveguide is excessively close, the bottom electrode may absorb the light field, resulting in higher optical loss. However, if the gap between the bottom electrode and the waveguide is excessively far, the electro-optic modulation effect of the electric field generated by the bottom electrode may be relatively poor. By limiting the gap between the bottom electrode and the waveguide to 500nm to 5000nm, better electro-optic modulation efficiency can be achieved while ensuring lower optical loss.

In one of the embodiments, the first dielectric layer also fills the gap between the bottom electrode and the waveguide.

In one of the embodiments, the organic electro-optic material layer also fills the gap between the bottom electrode and the waveguide.

In one of the embodiments, the waveguide is a silicon waveguide.

In one of the embodiments, the substrate includes:
a base; and
a second dielectric layer located on the base, where both the first dielectric layer and the waveguide are located on the second dielectric layer.

In one of the embodiments, the base is a silicon base, and both the first dielectric layer and the second dielectric layer are oxide layers.

In one of the embodiments, a width of the waveguide is 300nm to 1000nm, and/or a height of the waveguide is 150nm to 300nm.

### Beneficial Effects of Disclosure

### Beneficial Effects

By limiting the dimension of the waveguide 10 within the above range in the present application, the light field can be leaked into the organic electro-optic material to the maximum extent, thereby effectively reducing optical loss and having high electro-optic modulation efficiency.

### BRIEF DESCRIPTION OF THE DRAWINGS

### Description of Accompanying Drawings

To make the technical solutions provided in the embodiments of the present application more clearly illustrated, several accompanying drawings required by the embodiments for description are briefly introduced as follows. Obviously, the drawings in the following description are merely some embodiments of the present application, and for a person having ordinary skill in the art, other drawings of other embodiments can be obtained based on these drawings without an inventive effort.

FIG. 1 is a schematic cross-sectional structural view of an electro-optic modulator provided in Embodiment One of the present application.

FIG. 2 to FIG. 7 are schematic cross-sectional structural views of structures obtained in each step of a method for preparing an electro-optic modulator provided in Embodiment One of the present application.

FIG. 8 is a schematic cross-sectional structural view of the electro-optic modulator provided in Embodiment Two of the present application.

FIG. 9 is a schematic cross-sectional structural view of a structure obtained after an opening is obtained in the method for preparing the electro-optic modulator provided in Embodiment Two of the present application.

Description of Reference Numerals: 10: waveguide; 11: organic electro-optic material layer; 12: substrate; 121: base; 122: second dielectric layer; 13: silicon layer; 14: first dielectric layer; 141: opening; 15: first electrode; 16: second electrode; 161: bottom electrode; 1621: metal layer; and 1622: interconnecting plug.

### DESCRIPTION OF THE EMBODIMENTS

### Implementation of the Disclosure

To facilitate understanding of the present application, the present application will be described more comprehensively below with reference to the relevant accompanying drawings. The embodiments of the present application are illustrated in the accompanying drawings. However, the present application can be implemented in many different forms and is not limited to the embodiments described herein. On the contrary, the purpose of providing these embodiments is to make the disclosed content of the present application more thorough and comprehensive.

Unless otherwise defined, all technical and scientific terms used in the specification have the same meaning as commonly understood by a person having ordinary skill in the art. The terms used herein in the specification of the present application are for the purpose of describing specific embodiments only, and are not intended to limit the present application.

It can be understood that the terms "first", "second", "third", "fourth", etc. used in the present application may be used in the text to describe various elements, but these elements are not limited by these terms. These terms are only used to distinguish one element from another element. For instance, without departing from the scope of the present application, a first control device may be referred to as a second control device, and similarly, a second control device may be referred to as a first control device. The first control device and the second control device are both control devices, but they are not the same control device.

It can be understood that "connection" in the following embodiments should be understood as "electrical connection", "communication connection", etc. if the connected circuits, modules, units, etc. have the transmission of electrical signals or data between each other.

As used herein, the singular forms "a", "an", and "the" may include the plural forms as well, unless the context clearly dictates otherwise. It should also be understood that the terms "including/comprising" or "having" and the like designate the presence of stated features, integers, steps, operations, components, portions, or combinations thereof, but do not exclude the possibility of the presence or addition of one or more other features, integers, steps, operations, components, portions, or a combination thereof. Further, in the specification, the term "and/or" used in the specification includes any and all combinations of the associated listed items.

### Embodiment One

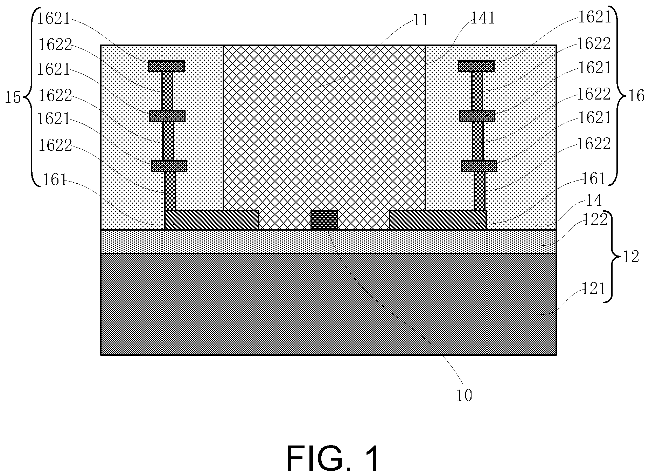

With reference to FIG. 1, the present application provides an electro-optic modulator. The electro-optic modulator includes: a substrate 12; a first dielectric layer 14 located on the substrate 12, an opening 141 being formed in the first dielectric layer 14, and the opening 141 exposing a portion of the substrate 12; a waveguide 10 located on the substrate 12 and located at the bottom of the opening 141; a first electrode 15 located in the first dielectric layer 14, located on one side of the waveguide 10, and spaced apart from the waveguide 10; a second electrode 16 located in the first dielectric layer 14, located on one side of the waveguide 10 distant from the first electrode 15, and spaced apart from the waveguide 10; and an organic electro-optic material layer 11 at least located in the opening 14 and at least covering the waveguide 10. The organic electro-optic material layer 11 covers the waveguide 10 in FIG. 1.

As an example, the waveguide 10 in the present application may be any non-slot waveguide. Since the waveguide 10 is a non-slot waveguide different from the current slot waveguide, the manufacturing process requirements are lower and the optical loss is lower. The organic electro-optic material layer is covered on the waveguide, so that a light field can be leaked into the organic electro-optic material to the maximum extent, thereby effectively reducing optical loss and having high electro-optic modulation efficiency.

In an example, a working mode of the waveguide 10 is a TM mode, and herein, a width of the waveguide 10 may be set according to actual needs and may not be limited herein. A height of the waveguide 10 may be 150nm to 300nm, and specifically, the height of the waveguide 10 may be 150nm, 200nm, 250nm, or 300nm, etc. When the working mode of the waveguide 10 is the TM mode, by limiting the height of the waveguide 10 within the above range, the light field can be leaked into the organic electro-optic material to the maximum extent, thereby effectively reducing optical loss and having high electro-optic modulation efficiency.

In another example, the working mode of the waveguide 10 is a TE mode, and herein, the height of the waveguide 10 may be set according to actual needs and may not be limited herein. The width of the waveguide 10 may be 300nm to 1000nm, and specifically, the width of the waveguide 10 may be 300nm, 400nm, 500nm, 600nm, 700nm, 800nm, 900nm, or 1000nm, etc. When the working mode of the waveguide 10 is the TE mode, by limiting the width of the waveguide 10 within the above range, the light field can be leaked into the organic electro-optic material to the maximum extent, thereby effectively reducing optical loss and having high electro-optic modulation efficiency.

In still another embodiment, the height of the waveguide 10 may be 150nm to 300nm, and the width of the waveguide 10 may be 300nm to 1000nm. To be specific, the height of the waveguide 10 may be 150nm, 200nm, 250nm, or 300nm, etc., and the width of the waveguide 10 may be 300nm, 400nm, 500nm, 600nm, 700nm, 800nm, 900nm, or 1000nm, etc. By limiting the height and width of the waveguide 10 to the above ranges, when the working mode of the waveguide 10 is the TE mode or the TM mode, the light field can be leaked into the organic electro-optic material to the maximum extent, thereby effectively reducing optical loss and having high electro-optic modulation efficiency.

As an example, the substrate 12 may include a base 121 and a second dielectric layer 122 located on the base 121. Herein, both the first dielectric layer 14 and the waveguide 10 are located on the second dielectric layer 122.

As an example, the base 121 may be but not limited to a silicon base. The second dielectric layer 122 may be but not limited to an oxide layer, such as a silicon oxide layer. To be specific, a thickness of the base 121 may be greater than a thickness of the second dielectric layer 122.

As an example, a structure of the first electrode 15 and a structure of the second electrode 16 may be the same. To be specific, in this embodiment, each of the first electrode 15 and the second electrode 16 may include: a bottom electrode 161 extending from the first dielectric layer 14 to the bottom of the opening 141, where a gap is provided between the bottom electrode 161 and the waveguide 10; a metal stack structure located in the first dielectric layer 14 and located on the bottom electrode 161. The metal stack structure includes a plurality of metal layers 1621 arranged at intervals and a plurality of interconnecting plugs 1622. The connection between the metal layer 1621 located on a top layer and the bottom electrode 161 and the connection between adjacent metal layers 1621 are made through the interconnecting plugs 1622, as shown in FIG. 1.

To be specific, the bottom electrode 161 extends from the inside of the first dielectric layer 14 to the bottom of the opening 141. The gap between the bottom electrode 161 and the waveguide 10 may be adjusted to the required optimal range, thereby ensuring better electro-optic modulation efficiency with lower optical loss.

To be specific, the gap between the bottom electrode 161 and the waveguide 10 may be set according to actual needs. In this embodiment, the gap between the bottom electrode 161 and the waveguide 10 may be but not limited to 500nm to 5000nm and to be specific, the gap between the bottom electrode 161 and the waveguide 10 may be 500nm, 1000nm, 2000nm, 3000nm, 4000nm, or 5000nm, etc.

To be specific, the bottom electrode 161 may be a doped silicon electrode. By using a doped silicon electrode as the bottom electrode 161 in the present application, the electric field generated by the doped silicon electrode may achieve electro-optic modulation. However, the gap between the bottom electrode 161 and the waveguide 10 cannot be excessively far or excessively close. If the gap between the bottom electrode 161 and the waveguide 10 is excessively close (e.g., less than 500nm), the bottom electrode 161 may absorb the light field, resulting in higher optical loss. However, if the gap between the bottom electrode 161 and the waveguide 10 is excessively far (e.g., greater than 5000 nm), the electro-optic modulation effect of the electric field generated by the bottom electrode 161 may be relatively poor. By limiting the gap between the bottom electrode 161 and the waveguide 10 to 500nm to 5000nm, better electro-optic modulation efficiency may be achieved while ensuring lower optical loss.

To be specific, the waveguide 10 may be a silicon waveguide.

To be specific, the base 121, the second dielectric layer 122, the waveguide 10, and the bottom electrode 161 may be obtained based on a same silicon-on-insulator (SOI) substrate. To be specific, the base 121 may be a back substrate of the SOI substrate, the second dielectric layer 122 may be a buried oxide layer of the SOI substrate, and the waveguide 10 and the bottom electrode 161 may be obtained by patterning top silicon of the SOI substrate. To be more specific, the waveguide 10 is obtained by directly etching the top silicon of the SOI substrate, and the bottom electrode 161 is obtained by etching the top silicon of the SOI substrate and then performing ion implantation and doping. The bottom electrode 161 may specifically be a heavily doped silicon electrode.

As an example, as shown in FIG. 1, the first dielectric layer 14 is not provided between the bottom electrode 161 and the waveguide 10. Herein, the organic electro-optic material layer 11 fills the gap. That is, the organic electro-optic material layer 11 is filled between the bottom electrode layer 161 and the waveguide 10 herein, and the organic electro-optic material layer 11 fills the opening 141 and extends to fill the gap between the bottom electrode layer 161 and the waveguide 10 herein.

To be specific, the metal stack structure in the first electrode 15 and the metal stack structure in the second electrode 16 are located on opposite sides of the organic electro-optic material layer 11.

As an example, the interconnecting plugs 1622 may be metal plugs. To be specific, the interconnecting plugs 1622 may include but not limited to aluminum plugs, copper plugs, nickel plugs, titanium plugs, etc. The metal layers 1621 may include copper layers, nickel layers, aluminum layers, titanium layers, etc.

As an example, an upper surface of the first dielectric layer 14 may be higher than an upper surface of the metal stack structure, and the first dielectric layer 14 may cover and protect the metal stack structure.

As an example, the first dielectric layer 14 may include but not limited to an oxide layer. To be specific, the first dielectric layer 14 may include but not limited to a silicon oxide layer.

As an example, the organic electro-optic material layer 11 may be but not limited to a polyphenylene vinylene layer, a polyacetylene layer, a polyparaphenylene layer, a polythiophene layer, a polythiophene derivative layer, or a polyalkyl fluorene layer, etc.

The present application further provides a method for preparing an electro-optic modulator, and the electro-optic modulator is used to prepare the electro-optic modulator in the above embodiment. The method for preparing the electro-optic modulator includes the following steps.

In S 10, a substrate is provided.

In S20, a waveguide and a bottom electrode are formed on the substrate, and the bottom electrode is located on two opposite sides of the waveguide and is spaced apart from the waveguide.

In S30, a first dielectric layer and a metal stack structure are formed, and the first dielectric layer covers the waveguide and the bottom electrode. The metal stack structure is located in the first dielectric layer and located on the bottom electrode. The metal stack structure includes a plurality of metal layers arranged at intervals and a plurality of interconnecting plugs. The connection between the metal layer located on a top layer and the bottom electrode and the connection between adjacent metal layers are made through the interconnecting plugs.

In S40, an opening is formed in the first dielectric layer, and the opening exposes the waveguide and a portion of the substrate.

In S50, an organic electro-optic material layer is formed in the opening, and the organic electro-optic material layer covers the waveguide 10 and a portion of the bottom electrode 161.

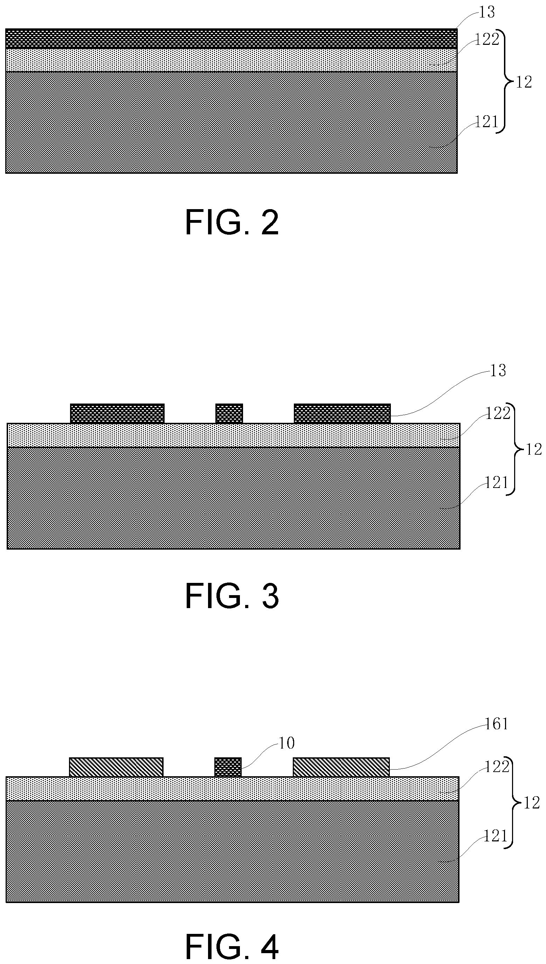

In step S10, as shown in FIG. 2, the substrate 12 may include a base 121 and a second dielectric layer 122, and the second dielectric layer 122 is located on the base 121.

In another example, the substrate 12 may be a silicon on insulator (SOI) substrate. Herein, the base 121 can be a back substrate of the SOI substrate, the second dielectric layer 122 may be a buried oxide layer of the SOI substrate, and a top layer of silicon is formed on the second dielectric layer 122 as a silicon layer 13.

In step S20, as shown in FIGS. 3 to 4, the formation of the waveguide 10 and the bottom electrode 161 on the substrate 12 may include the following steps:

In S201, the silicon layer 13 is patterned to obtain a patterned silicon layer, as shown in FIG. 3. To be specific, a photolithography and etching process may be used to pattern the silicon layer 13, and the patterned silicon layer includes the waveguide 10 and defines a position and a shape of the bottom electrode 161.

In S202, ion implantation is performed on a portion of the patterned silicon layer that defines the position and the shape of the bottom electrode 161 to form the bottom electrode 161, as shown in FIG. 4. To be specific, the bottom electrode 161 is a doped silicon electrode, and a doping concentration of the bottom electrode 161 may be set according to actual needs. In this embodiment, the bottom electrode 161 may include but not limited to a heavily doped silicon electrode.

In step S30, the formation of the first dielectric layer 14 and the metal stack structure may include the following steps:

In S301, a bottom dielectric layer is formed, and the bottom dielectric layer covers the waveguide 10 and the bottom electrode 161.

In S302, an interconnecting via is formed in the bottom dielectric layer, the interconnecting via exposes the bottom electrode 161, and the interconnecting plug 1622 located on a bottom layer is formed in the interconnecting via.

In S303, the metal layer 1621 located on the bottom layer is formed on an upper surface of the bottom dielectric layer, and the metal layer 1621 located on the bottom layer is in contact with the interconnecting plug 1622 located on the bottom layer.

In S304, an interlayer dielectric layer is formed on the upper surface of the formed dielectric layer, and the interlayer dielectric layer covers the formed metal layer 1621.

In S305, an interconnecting via is formed in the interlayer dielectric layer, the interconnecting via exposes the metal layer 1621 covered by the interlayer dielectric layer, and the interconnecting plug 1622 between layers is formed in the interconnecting via.

In S306, the metal layer 1621 between layers is formed on an upper surface of the interlayer dielectric layer, and the metal layer 1621 between layers is in contact with the interconnecting plug 1622 between layers.

In S307, the above steps are repeated several times.

In S308, the metal layer 1621 located on the top layer is formed on the upper surface of the interlayer dielectric layer that is formed last.

In S309, a top dielectric layer is formed, and the top dielectric layer covers the metal layer 1621 located on the top layer.

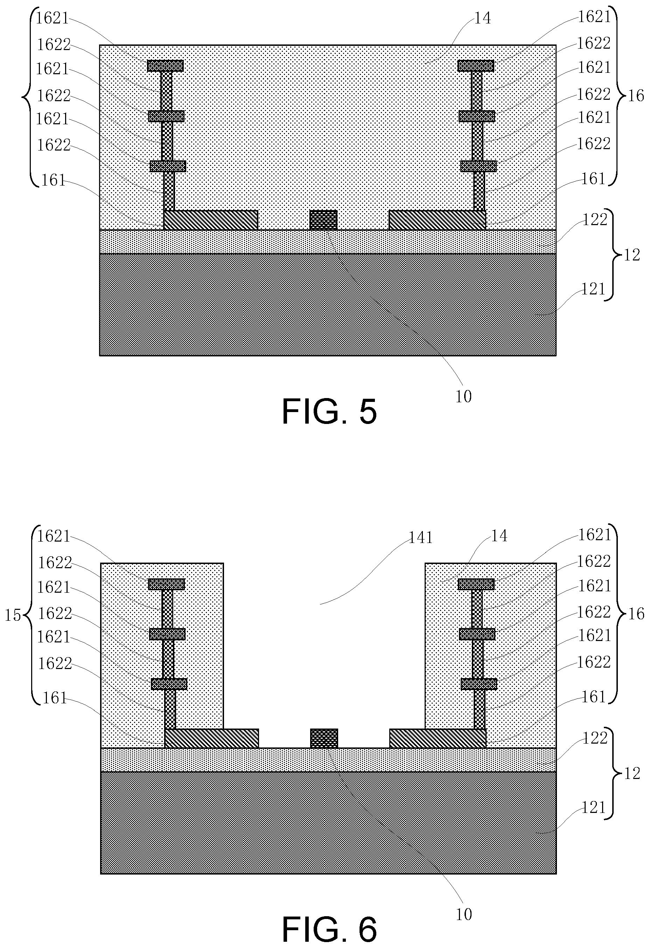

To be specific, the dielectric layers in steps S301 to S309 together constitute the first dielectric layer 14, that is, the bottom dielectric layer, the interlayer dielectric layer, and the top dielectric layer together constitute the first dielectric layer 14. The structure obtained in step S30 is shown in FIG. 5.

In step S40, a photolithography process may be used to form the opening 141, and the structure obtained in step S40 is shown in FIG. 6. To be specific, the opening 141 in this embodiment completely exposes an upper surface and side surfaces of the waveguide 10, the opening 141 extends between the waveguide 10 and the bottom electrode 161, and the bottom of the opening 141 is flush with the bottom of the waveguide 10.

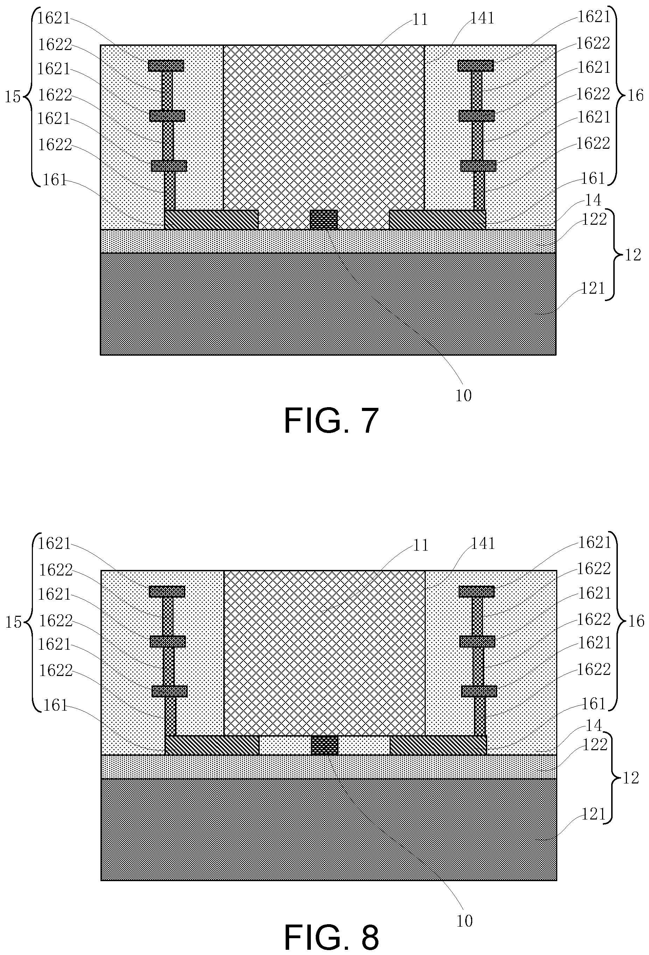

In step S50, the organic electro-optic material layer 11 may be formed using but not limited to a physical vapor deposition process, a chemical vapor deposition process, or an atomic layer deposition process. Herein, the organic electro-optic material layer 11 fills the opening 141 and extends to fill the gap between the bottom electrode layer 161 and the waveguide 10, and the structure obtained in step S50 is shown in FIG. 7.

### Embodiment Two

With reference to FIG. 8 together with FIG. 1, the present application further provides an electro-optic modulator. The structure of the electro-optic modulator in this embodiment is substantially the same as that of the electro-optic modulator in Embodiment One, and the differences therebetween are as follows: In the electro-optic modulator in Embodiment One, the waveguide 10 is located at the bottom of the opening, the first dielectric layer 14 is not provided between the bottom electrode 161 and the waveguide 10, and herein, the organic electro-optic material layer 11 fills the gap. That is, the organic electro-optic material layer 11 is filled between the bottom electrode layer 161 and the waveguide 10 herein, and the organic electro-optic material layer 11 fills the opening 141 and extends to fill the gap between the bottom electrode layer 161 and the waveguide 10 herein. In the electro-optic modulator in this embodiment, the waveguide 10 is located below the opening 141, and the first dielectric layer 14 also fills the gap, that is, the first dielectric layer 14 is provided between the bottom electrode 161 and the waveguide 10 herein. Herein, the organic electro-optic material layer 11 is completely located above the waveguide 10 and covers the upper surface of the waveguide 10.

As an example, the upper surface of bottom electrode 161 may be flush with the upper surface of waveguide 10. The upper surface of the first dielectric layer 14 located between the bottom electrode 161 and the waveguide 10 is flush with the upper surface of the bottom electrode 161 and the upper surface of the waveguide 10.

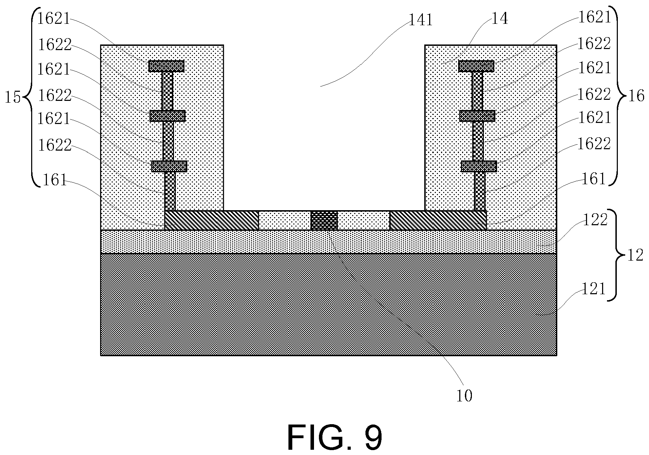

The present application further provides a method for preparing an electro-optic modulator. The method for preparing the electro-optic modulator in this embodiment is substantially the same as the method for preparing the electro-optic modulator in Embodiment One, and the differences therebetween are as follows: In step S40 and step S50, the opening formed in step S40 in the Embodiment One completely exposes the upper surface and the side surfaces of the waveguide 10, the opening 141 extends between the waveguide 10 and the bottom electrode 161, and the bottom of the opening 141 is flush with the bottom of the waveguide 10. The organic electro-optic material layer 11 formed in step S50 fills the opening 141 and extends to fill the gap between the bottom electrode layer 161 and the waveguide 10. The opening in the present application only exposes the upper surface of the waveguide 10, the opening 141 does not extend between the waveguide 10 and the bottom electrode 161, and the bottom of the opening 141 is flush with the top of the waveguide 10, as shown in FIG. 9. The organic electro-optic material layer 11 in step S50 is completely located above the waveguide 10 and covers the upper surface of the waveguide 10.

In the description of the specification, descriptions with reference to the terms such as "one of the embodiments", "some embodiments", "other embodiments", etc. means that the specific features, structures, materials, or characteristics described in combination with the embodiment(s) or example(s) are included in at least one embodiment or example of the present application. In the specification, the schematic description of the above-mentioned terms does not necessarily refer to the same embodiment or example.

The technical features of the above-described embodiments may be combined arbitrarily. In order to simplify the description, not all possible combinations of the technical features in the above embodiments are described. However, as long as there is no contradiction in the combinations of these technical features, these combinations should be considered to be within the scope of the description in this specification.

The abovementioned embodiments only represent several embodiments of the present application, and the descriptions thereof are specific and detailed, but should not be construed as a limitation on the scope of the invention patent. It should be pointed out that for a person having ordinary skill in the art, without departing from the concept of the present application, several modifications and improvements can be made, which all belong to the protection scope of the present application. Therefore, the protection scope of the patent of the present application should be subject to the appended claims.

## Claims

1. An electro-optic modulator, **characterized in** comprising:
a substrate;
a first dielectric layer, located on the substrate, an opening being formed in the first dielectric layer, and the opening exposing a portion of the substrate;
a waveguide, located on the substrate and located at a bottom of the opening or below the opening;
a first electrode, located in the first dielectric layer, located on one side of the waveguide, and spaced apart from the waveguide;
a second electrode, located in the first dielectric layer, located on one side of the waveguide distant from the first electrode, and spaced apart from the waveguide; and
an organic electro-optic material layer, at least located in the opening and at least covering the waveguide.

2. The electro-optic modulator according to claim 1, **characterized in that** each of the first electrode and the second electrode comprises:
a bottom electrode, extending from the first dielectric layer to the bottom of the opening, wherein a gap is provided between the bottom electrode and the waveguide;
a metal stack structure, located in the first dielectric layer and located on the bottom electrode, wherein the metal stack structure comprises a plurality of metal layers arranged at intervals and a plurality of interconnecting plugs, and a connection between the metal layer located on a bottom layer and the bottom electrode and a connection between adjacent metal layers are made through the interconnecting plugs.

3. The electro-optic modulator according to claim 2, **characterized in that** the bottom electrode is a doped silicon electrode.

4. The electro-optic modulator according to claim 2, **characterized in that** the gap between the bottom electrode and the waveguide is 500nm to 5000nm.

5. The electro-optic modulator according to claim 2, **characterized in that** the first dielectric layer also fills the gap between the bottom electrode and the waveguide.

6. The electro-optic modulator according to claim 2, **characterized in that** the organic electro-optic material layer also fills the gap between the bottom electrode and the waveguide.

7. The electro-optic modulator according to claim 1, **characterized in that** the waveguide is a silicon waveguide.

8. The electro-optic modulator according to claim 1, **characterized in that** the substrate comprises:
a base; and
a second dielectric layer, located on the base, wherein both the first dielectric layer and the waveguide are located on the second dielectric layer.

9. The electro-optic modulator according to claim 8, **characterized in that** the base is a silicon base, and both the first dielectric layer and the second dielectric layer are oxide layers.

10. The electro-optic modulator according to any one of claims 1 to 9, **characterized in that** a width of the waveguide is 300nm to 1000nm, and/or a height of the waveguide is 150nm to 300nm.
